# FASCICULE DE BREVET EUROPEEN

(11) **EP 0 628 837 B1**
(45) Date de publication et mention de la délivrance du brevet: **26.11.1997**
(21) Numéro de dépôt: 94401164.2
(22) Date de dépôt: 26.05.1994
(51) Int. Cl.: G01S 3/786, F41G 7/22

(54) **Procédé et dispositif pour déterminer la localisation d'une cible**
Verfahren und Anordnung zur Ortsbestimmung eines Zieles
Method and device for determining the location of a target

(30) Priorité: 11.06.1993 FR 9307064
(43) Date de publication de la demande: 14.12.1994
(73) Titulaire: AEROSPATIALE Société Nationale Industrielle, 75781 Paris Cédex 16 (FR)
(72) Inventeur: Schlossers, Christophe, F-92320 Chatillon (FR); Burzawa, Stéphane, F-78000 Versailles (FR); Megel, François, F-92370 Chaville (FR); Le Gouzouguec, Anne, F-92170 Vanves (FR)
(74) Mandataire: Bonnetat, Christian

(56) Documents cités:
- EP-A- 0 530 049
- US-A- 4 227 212
- US-A- 4 364 089
- US-A- 4 405 940
- US-A- 4 539 590
- US-A- 5 187 777
- PATTERN RECOGNITION, vol.23, no.7, 1990, HEAD. HILL HALL, OXFORD, GB pages 785 - 798 HSI-JIAN LEE ET AL 'Multi-frame ship detection and tracking in an infrared image sequence'

## Description

La présente invention concerne un procédé et un dispositif pour déterminer la localisation d'une cible observée dans le champ de vision d'un détecteur optique.

De nombreuses armes, en particulier des armes anti-char, utilisent un détecteur optique solidaire du poste de tir et pointé en direction d'une cible devant être détruite, par exemple, par l'intermédiaire d'un missile. Certaines armes assurent la localisation et le guidage du missile le long d'un axe qui est continuellement dirigé sur la cible.

Par le document EP-A-0 206 912, on connaît, par exemple, un système, comportant un détecteur optique, destiné à la localisation d'un mobile par rapport à un axe perpendiculaire au plan dudit détecteur. Ce système peut être intégré dans une arme pour le guidage d'un missile le long dudit axe perpendiculaire au détecteur. Il est alors essentiel, pour que le missile touche la cible, que le détecteur optique reste continuellement pointé en direction de cette dernière ou que l'on puisse rapidement effectuer un repointage dans le cas où un incident imprévu provoque le dépointage dudit détecteur optique.

Il peut en effet arriver que ledit axe se trouve brusquement écarté de la cible, par exemple, à la suite d'un déplacement de l'arme provoqué par un mouvement incontrôlé de l'utilisateur de celle-ci. Un tel mouvement incontrôlé peut, en particulier, être provoqué par le délestage engendré lors du lancement du missile.

Dans un tel cas, afin que le missile lancé ne manque pas sa cible, il faut pouvoir rapidement redéfinir l'axe de guidage du missile, c'est-à-dire qu'il faut pouvoir déterminer, dans un laps de temps très court, la localisation de la cible par rapport à l'axe du détecteur optique, de manière à pouvoir mettre en oeuvre le système décrit dans le document EP-A-0 206 912.

La présente invention a pour objet de déterminer, de façon rapide et efficace, la localisation d'une cible initialement repérée dans le champ de vision d'un détecteur optique.

A cette fin, selon l'invention, le procédé pour déterminer la localisation d'une cible observée dans le champ de vision d'un détecteur optique, est remarquable en ce que :
- dans une étape préliminaire, on effectue une prise de vue du champ de vision du détecteur optique, et on détermine un modèle du fond comportant au moins une image partielle du fond et un modèle de la cible comportant une image partielle de la cible, ainsi que des caractéristiques cinématiques de cette dernière ; et
- pendant toute la durée de détermination de la localisation, on répète les étapes suivantes :
   . on effectue une prise de vue actuelle du champ de vision ;
   . on isole au moins une fenêtre de recherche du fond à partir de ladite prise de vue actuelle;
   . on recherche l'image partielle du fond dans ladite fenêtre de recherche isolée ;
   . à partir de la position de cette image partielle dans ladite fenêtre de recherche, on détermine le déplacement du détecteur optique entre la prise de vue précédente et ladite prise de vue actuelle ;
   . on isole une fenêtre de recherche de la cible à partir de la prise de vue actuelle, en tenant compte du déplacement calculé du détecteur optique et de la position de la cible dans la prise de vue précédente ;
   . on recherche l'image partielle de la cible dans ladite fenêtre de recherche isolée ;
   . à partir de la position de cette image partielle dans ladite fenêtre de recherche, on détermine le déplacement de la cible par rapport au fond ;
   . on compare ledit déplacement calculé de la cible à deux valeurs, minimale et maximale, de déplacement déterminées à partir des caractéristiques cinématiques de la cible, de sorte que si le déplacement calculé est compris entre lesdites deux valeurs on valide la localisation de la cible obtenue par ce déplacement calculé, sinon on détermine une position estimée de la cible à partir des caractéristiques cinématiques de cette dernière ; et
   . on remet à jour conditionnellement les modèles du fond et de la cible.

Par conséquent, la localisation de la cible est effectuée en deux étapes successives. En effet, on détermine, d'abord, le déplacement du détecteur optique entre la prise de vue précédente et la prise de vue actuelle et on recherche, ensuite, la position de la cible, celle-ci ayant pu se déplacer entre-temps.

Ainsi, cette détermination de la localisation en deux étapes permet de remédier efficacement aux inconvénients liés à un éventuel double déplacement, à savoir un déplacement du détecteur optique important et un déplacement de la cible.

De plus, par le fait de rechercher, aussi bien les images partielles du fond que l'image partielle de la cible, dans des fenêtres de recherche, de surfaces inférieures à la surface totale de l'image du champ de vision, la recherche est considérablement simplifiée et, par conséquent, la durée de recherche est, de même, considérablement réduite. En effet, la taille de ces fenêtres est définie de sorte que la recherche d'une image soit limitée à une durée déterminée, cette durée dépendant évidemment de l'utilisation pratique envisagée du procédé.

Par ailleurs, les modèles du fond et de la cible comportent, avantageusement, des valeurs statistiques de paramètres déterminés dudit fond et de ladite cible. Ainsi, si les valeurs effectives desdits paramètres s'écartent trop des valeurs statistiques que contiennent ces modèles, on est averti d'une modification de l'état du fond ou de l'état de la cible, par exemple une variation de l'éclairage ou un changement de direction de la cible, et on peut alors déclencher une remise à jour des modèles afin de tenir compte de cette modification.

De façon avantageuse, on prévoit, d'une part, que l'image partielle de la cible est restreinte à un motif caractéristique de celle-ci et, d'autre part, que les images partielles du fond sont restreintes à des motifs caractéristiques dudit fond.

Ainsi, la recherche dans les fenêtres de recherche est simplifiée étant donné que l'on se restreint à des motifs de petites tailles, mais toutefois assez caractéristiques pour pouvoir être repérés sans ambiguïté.

Par ailleurs, de façon avantageuse, les différentes fenêtres de recherche sont déterminées, de sorte que les images du fond et de la cible correspondantes sont centrées dans lesdites fenêtres. Ainsi, si le dépointage n'est pas trop important, lesdites images se trouvent bien présentes dans les fenêtres de recherche dans la position dépointée du détecteur optique et ceci quel que soit le sens de déplacement du dépointage.

Dans le cas où le déplacement du détecteur optique est très important ou que la cible a été mal localisée, on remet à jour le modèle du fond issu d'une compression d'image, de manière à déterminer le déplacement du fond à partir du champ de vision global. Dès que la localisation est validée ou que le détecteur optique n'est plus soumis qu'à des mouvements peu importants, on réutilise un modèle du fond comportant une image partielle dudit fond.

Pour la mise en oeuvre du procédé conforme à l'invention, on prévoit un dispositif qui comporte :
- des moyens de prise de vue, pour effectuer une prise de vue du champ de vision du détecteur optique ;
- un dispositif d'extraction d'images, pour isoler au moins une image partielle du fond et une image partielle de la cible, ainsi qu'une fenêtre de recherche du fond et une fenêtre de recherche de la cible ;
- une mémoire de données, pour enregistrer les images partielles du fond et de la cible, ainsi que les valeurs caractéristiques de paramètres déterminés du fond et de la cible ;
- un dispositif de mise en correspondance, recevant les informations de la mémoire de données et du dispositif d'extraction d'images et recherchant l'image partielle du fond et l'image partielle de la cible dans les fenêtres de recherche correspondantes ;
- un premier calculateur associé audit dispositif de mise en correspondance, calculant le déplacement du détecteur optique et le déplacement de la cible ;
- un système de validation de la localisation de la cible, comparant le déplacement calculé de la cible à des valeurs de déplacement déterminées à partir de caractéristiques cinématiques de la cible, pour déterminer une estimation de la position de la cible ; et
- un second calculateur, permettant de remettre à jour les modèles du fond et de la cible.

Les figures du dessin annexé feront bien comprendre comment l'invention peut être réalisée. Sur ces figures, des références identiques désignent des éléments semblables.

La figure 1 montre un détecteur optique pointé en direction d'une cible, auquel est associé un dispositif conforme à l'invention.

La figure 2 montre le détecteur optique de la figure 1 à un instant ultérieur, dans une position dépointée.

La figure 3 illustre le champ de vision du détecteur optique dans la position de la figure 1.

La figure 4 illustre le champ de vision du détecteur optique dans la position de la figure 2.

La figure 5 montre, de façon schématique, différentes étapes successives pour déterminer la localisation d'une cible.

La figure 6 illustre le principe de calcul du déplacement du détecteur optique.

La figure 7 illustre le principe de calcul du déplacement de la cible.

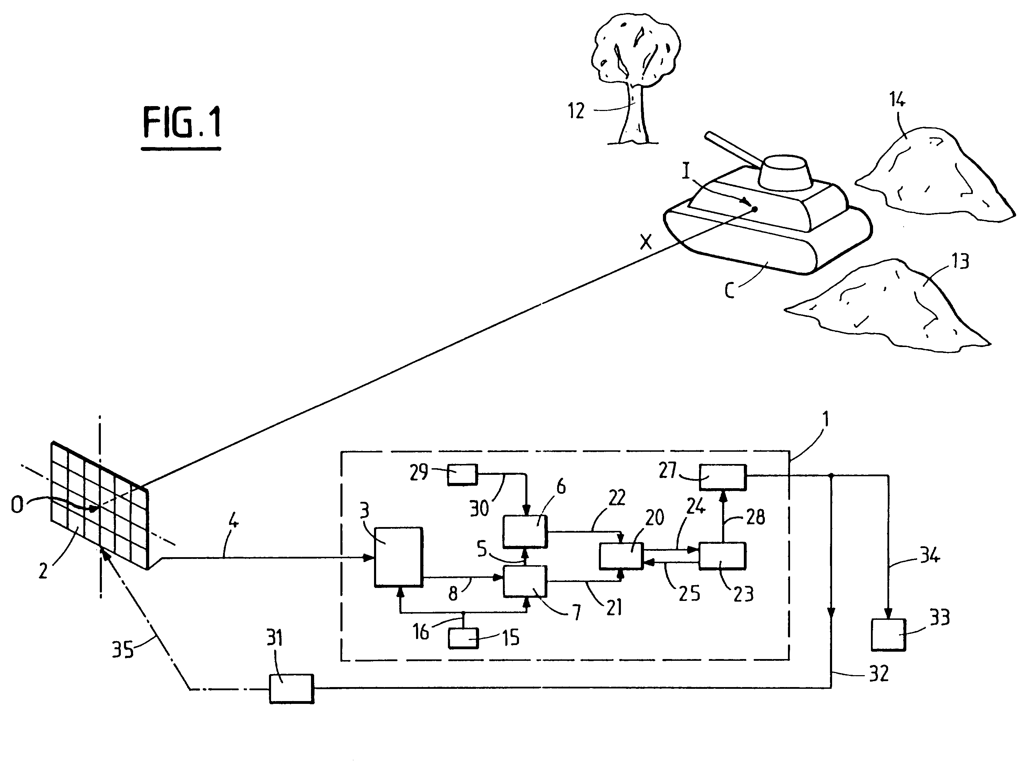

Le dispositif 1, conforme à la présente invention et représenté par son schéma synoptique sur la figure 1, est destiné à déterminer la localisation d'une cible C observée dans le champ de vision d'un détecteur optique 2.

Initialement, ledit détecteur optique 2 est pointé, tel que représenté sur la figure 1, en direction de ladite cible C, suivant un axe OX (dirigé sur un point I de la cible C) qui représente, par exemple, la ligne de visée d'une arme anti-char (non représentée) équipée dudit détecteur optique 2.

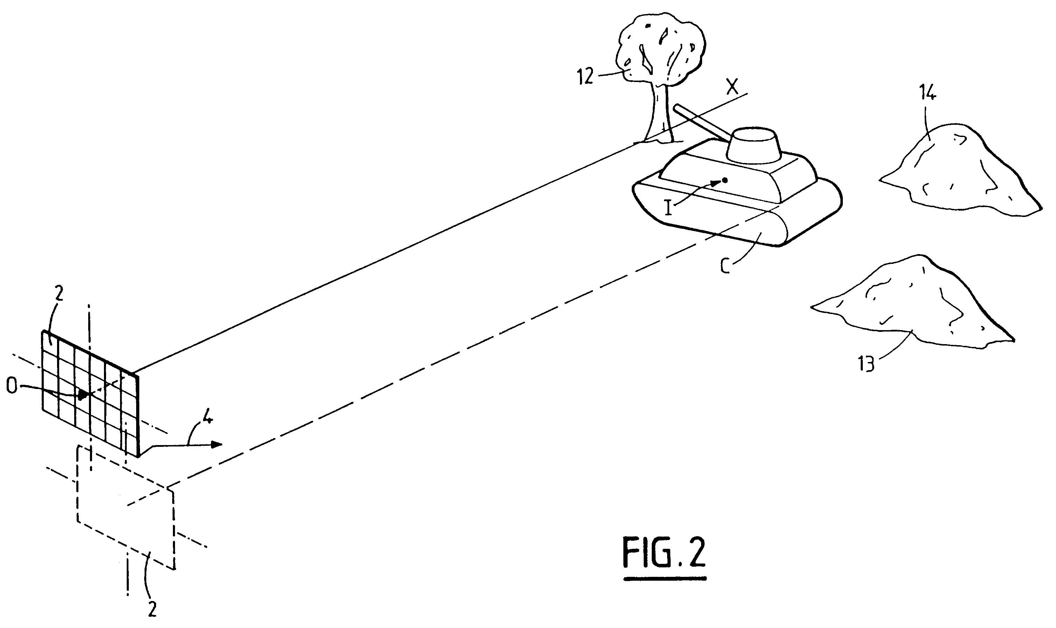

Il peut arriver qu'un incident imprévu ou une manoeuvre imparfaitement exécutée par l'utilisateur de l'arme (par exemple lors du lancement d'un missile) entraîne une déviation de cet axe OX de la cible C, tel que représenté sur la figure 2. Dans un tel cas, on utilise le dispositif 1 conforme à l'invention pour déterminer rapidement la localisation de la cible C, plus précisément pour déterminer la position du point I de celle-ci.

Ledit dispositif 1 comporte des moyens de prise de vue 3, reliés par l'intermédiaire d'une liaison 4 au détecteur optique 2 et susceptibles d'effectuer une prise de vue du champ de vision de ce dernier. Les moyens de prise de vue 3 et le détecteur optique 2 reliés ensemble constituent, par exemple, une caméra visible ou infrarouge.

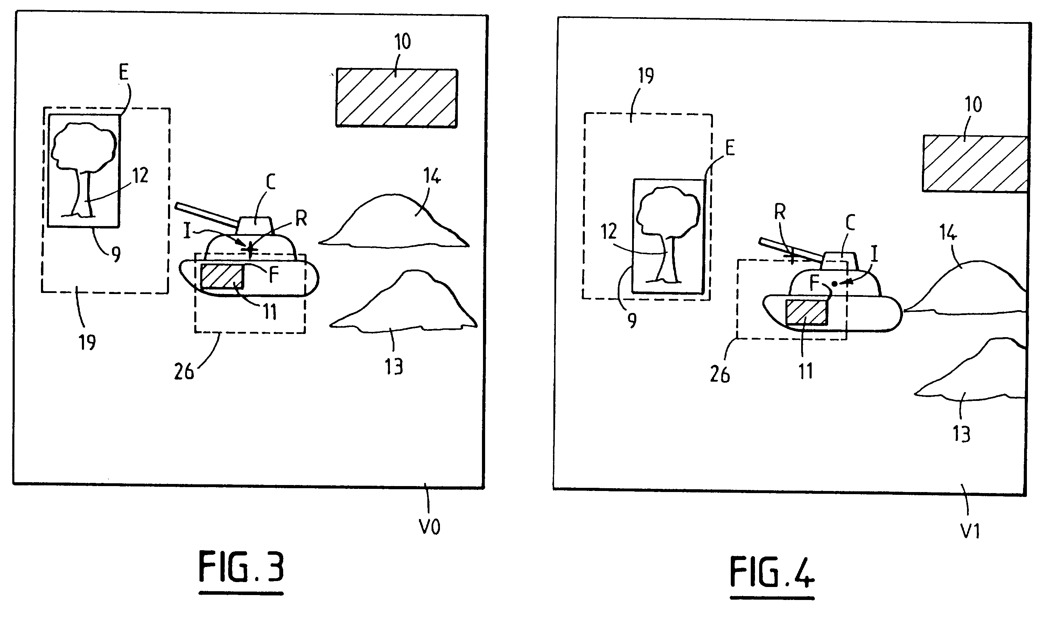

Sur la figure 3, on a représenté une image V0 du champ de vision pour une position pointée dudit détecteur optique 2, correspondant à la position représentée sur la figure 1.

La cible C est sensiblement centrée dans cette image V0. Un réticule R, déterminant le centre du champ de vision et correspondant à la direction de l'axe OX, est superposé à l'image de la cible C, au niveau du point I.

Un dispositif d'extraction d'images 7 analyse cette image V0 qui lui est transmise par une liaison 8. Il détermine dans cette image V0, tel que représenté sur la figure 3, des images partielles 9 et 10 du fond et une image 11 de la cible C. L'image de la cible peut être, soit partielle, telle que l'image 11 représentée, soit totale. Pour représenter une telle image, plusieurs solutions sont possibles. On peut utiliser, par exemple, des matrices de pixels, des segments engendrés par approximation polygonale du contour ou des descripteurs de Fourier du contour. Dans un but d'illustration, on a représenté dans l'image V0 un élément de l'environnement 12 correspondant à l'image partielle 9 du fond, ainsi que des éléments de l'environnement 13 et 14.

Le dispositif d'extraction d'images 7 transmet ces résultats, par l'intermédiaire d'une liaison 5, à une mémoire de données 6 qui enregistre les différentes images partielles 9, 10 et 11 déterminées. Ladite mémoire de données 6 enregistre également des valeurs statistiques de paramètres déterminés du fond et de la cible, ainsi que des caractéristiques cinématiques de la cible. L'étape préliminaire, décrite précédemment, est donc destinée à enregistrer des modèles du fond et de la cible, comportant à la fois des images partielles, des valeurs statistiques et des caractéristiques cinématiques.

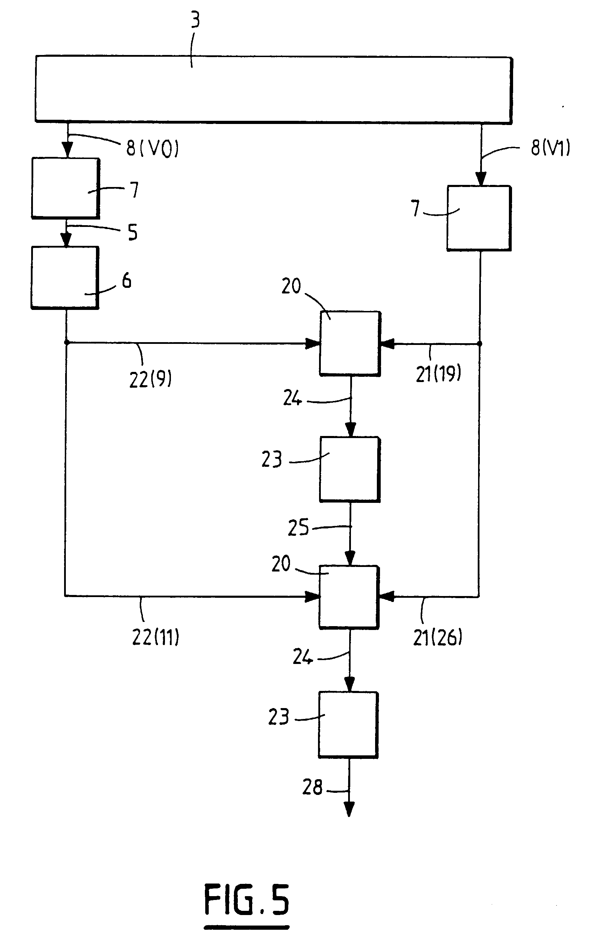

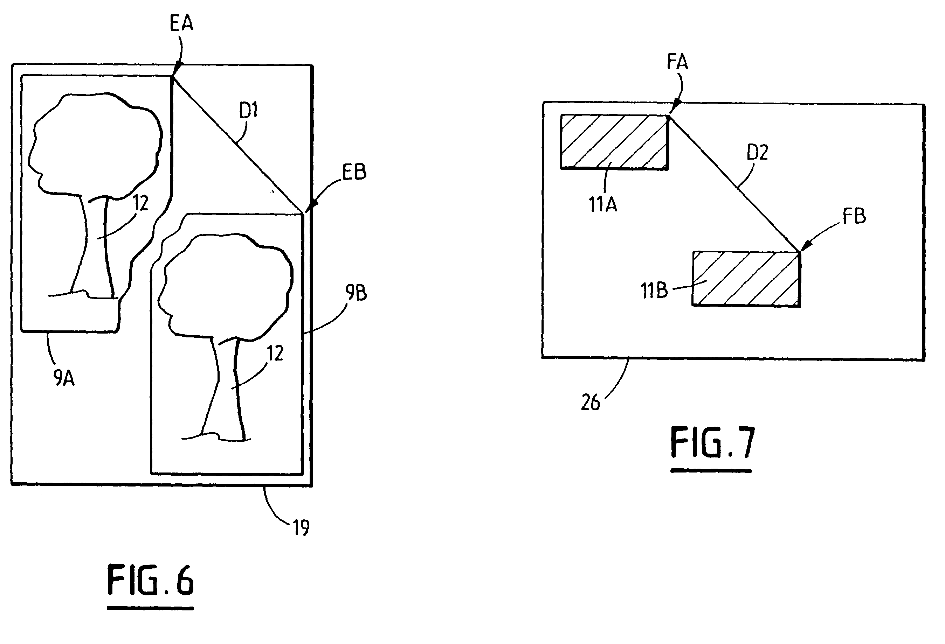

Le dispositif 1 conforme à l'invention pour déterminer la localisation de la cible C est déclenché par un élément de déclenchement 15 qui comporte une base de temps (non représentée) et qui déclenche, simultanément, par l'intermédiaire d'une liaison 16, les moyens de prise de vue 3 et le dispositif d'extraction d'images 7. Ce déclenchement est effectué à des intervalles de temps réguliers, par exemple toutes les 40 ms, de manière à pouvoir répéter continuellement, après chaque déclenchement, les différentes étapes successives pour la localisation de la cible C décrites ci-après. Ces étapes successives sont, par ailleurs, représentées de façon schématique sur la figure 5. Les références entre parenthèses sur cette figure 5 correspondent aux références des informations transmises par les différentes liaisons concernées.
a) Lorsqu'ils sont déclenchés, les moyens de prise de vue 3 prennent une image V1 (représentée sur la figure 4) du champ de vision du détecteur optique 2 dans la position (dépointée) de la figure 2 (on a par ailleurs représenté sur cette figure 2, en traits interrompus, ledit détecteur optique dans sa position de la figure 1, c'est-à-dire dans la dernière position où la cible a été localisée) et la transmettent au dispositif d'extraction d'images 7 par la liaison 8.
b) Ce dispositif d'extraction d'images 7 isole, dans ladite image V1, une fenêtre 19 de recherche du fond, dans laquelle est supposée se trouver l'une 9 des images partielles du fond enregistrées précédemment par la mémoire de données 6.
c) Un dispositif de mise en correspondance 20 reçoit, d'une part, des informations concernant ladite fenêtre 19 de recherche du fond par une liaison 21 et, d'autre part, des informations concernant l'image partielle 9 enregistrée dans la mémoire de données 6 par une liaison 22.
   Ledit dispositif de mise en correspondance 20 recherche alors dans la fenêtre de recherche 19, tel que représenté sur la figure 6, la position 9B de l'image partielle 9 du fond, correspondant à la situation représentée sur la figure 4. Il communique le résultat obtenu, par une liaison 24, à un calculateur 23 qui lui est associé.
d) Le calculateur 23, connaissant cette position 9B de l'image partielle 9 dans la fenêtre 19 et la position 9A dans l'état de la dernière position où la cible a été localisée (figure 3), détermine la distance D1 d'un même point E de l'image partielle 9, entre sa position EA dans l'état de la dernière position où la cible a été localisée et sa position EB dans l'état dépointé, et il communique cette distance D1 au dispositif de mise en correspondance 20 par une liaison 25.
   Cette distance D1 correspond au déplacement du détecteur optique 2 entre les positions représentées respectivement sur les figures 1 et 2. Dans le cas où la cible C s'est également déplacée, la connaissance de D1 ne suffit pas pour retrouver directement la position du point I recherché. Il est nécessaire, en effet, de déterminer de plus le déplacement de la cible par rapport au fond.

A cet effet, on effectue les étapes décrites ci-après.
e) Le dispositif d'extraction d'images 7 isole dans l'image V1, en tenant compte du déplacement D1 calculé et de la position de la cible C dans l'image V0, une fenêtre 26 de recherche de la cible, dans laquelle est supposée se trouver l'image partielle 11 de la cible C, enregistrée par la mémoire de données 6.
f) A l'aide des informations reçues concernant, à la fois, l'image partielle 11 de la cible C et la fenêtre 26 de recherche de la cible, le dispositif de mise en correspondance 20 recherche dans ladite fenêtre 26 la position 11B de l'image partielle 11 de la cible C dans l'état (dépointé) de la figure 4 et il communique cette position au calculateur 23.
g) Ledit calculateur 23, connaissant cette position 11B, ainsi que la position 11A de l'image partielle 11 de la cible par rapport à la fenêtre 26 dans l'état de la dernière position où la cible a été localisée (figure 3), détermine la distance D2 d'un même point F de l'image partielle 11, entre sa position FA dans l'état de la dernière position où la cible a été localisée et sa position FB dans l'état dépointé, tel que représenté sur la figure 7. La distance D2 correspond au déplacement effectué par la cible C.
h) Ledit calculateur 23 transmet ces informations à un système de validation 27 de la localisation de la cible, par l'intermédiaire d'une liaison 28. Ce système de validation 27 compare le déplacement calculé D2 de la cible C à deux valeurs, minimale et maximale, de déplacement déterminées à partir des caractéristiques cinématiques de la cible C (que lui a transmises la mémoire de données 6 par l'intermédiaire d'une liaison non représentée). Si le déplacement calculé D2 est compris entre lesdites deux valeurs, le système de validation 27 valide la localisation de la cible C obtenue à partir de ce déplacement D2. Sinon, il détermine, par exemple au moyen d'un filtre de Kalman, une position estimée de la cible C calculée à partir des caractéristiques cinématiques.
i) A partir des données relatives à cette nouvelle position de la cible C, un calculateur 29 remet à jour les modèles du fond et de la cible et les transmet à la mémoire de données 6 par l'intermédiaire d'une liaison 30.

Ces différentes étapes a à i sont effectuées après chaque déclenchement commandé à intervalles de temps réguliers par l'élément de déclenchement 15. Le dispositif 1 conforme à l'invention permet ainsi de déterminer continuellement la localisation de la cible C.

Comme mentionné précédemment, les modèles du fond et de la cible comportent des valeurs statistiques de paramètres déterminés dudit fond et de ladite cible. Selon un mode de fonctionnement de l'invention (non représenté), une variation suffisante mais pas trop importante de certains de ces paramètres par rapport aux valeurs statistiques enregistrées déclenche une remise à jour automatique des modèles, permettant ainsi de tenir compte par exemple d'un changement de direction de la cible ou d'une modification de l'éclairage.

Selon le mode de réalisation, le système de validation 27 communique la position de la cible C, soit à un système de commande 31 par l'intermédiaire d'une liaison 32, soit à un dispositif d'affichage 33 par l'intermédiaire d'une liaison 34. Le système de commande 31 est relié au détecteur optique 2 par une liaison 35 et permet de repointer celui-ci, de façon automatique, dès qu'il a connaissance du résultat transmis par le système de validation 27. Au contraire, le dispositif d'affichage 33 communique le résultat à l'utilisateur du dispositif 1, qui peut alors déplacer le détecteur optique 2, soit manuellement, soit en commandant un élément de positionnement spécifique (non représenté).

On notera que le dispositif de mise en correspondance 20 est susceptible de déterminer la position 9B de l'image partielle 9 du fond dans la fenêtre de recherche 19 ou la position 11B de l'image partielle 11 de la cible dans la fenêtre de recherche 26, même dans le cas où seule une partie de ces images partielles apparaît dans lesdites fenêtres correspondantes.

Le dispositif 1 conforme à l'invention peut être réalisé au moins en partie sous forme de carte de processeur.

## Revendications

1. Procédé pour déterminer la localisation d'une cible (C) observée dans le champ de vision d'un détecteur optique (2),
caractérisé en ce que :
- dans une étape préliminaire, on effectue une prise de vue (V0) du champ de vision du détecteur optique (2) et on détermine un modèle du fond comportant au moins une image partielle (9,10) du fond et un modèle de la cible comportant une image partielle (11) de la cible, ainsi que des caractéristiques cinématiques de cette dernière ; et
- pendant toute la durée de détermination de la localisation, on répète les étapes suivantes :
. on effectue une prise de vue actuelle (V1) du champ de vision ;
. on isole au moins une fenêtre (19) de recherche du fond à partir de ladite prise de vue actuelle (V1);
. on recherche l'image partielle (9) du fond dans ladite fenêtre de recherche isolée (19) ;
. à partir de la position de cette image partielle (9) dans ladite fenêtre de recherche (19), on détermine le déplacement (D1) du détecteur optique (2) entre la prise de vue précédente et ladite prise de vue actuelle ;
. on isole une fenêtre (26) de recherche de la cible à partir de la prise de vue actuelle (V1), en tenant compte du déplacement calculé du détecteur-optique et de la position de la cible dans la prise de vue précédente ;
. on recherche l'image partielle (11) de la cible (C) dans ladite fenêtre de recherche isolée (26) ;
. à partir de la position de cette image partielle (11) dans ladite fenêtre de recherche (26), on détermine le déplacement (D2) de la cible (C) par rapport au fond ;
. on compare ledit déplacement (D2) calculé de la cible (C) à deux valeurs, minimale et maximale, de déplacement déterminées à partir des caractéristiques cinématiques de la cible (C), de sorte que si le déplacement calculé (D2) est compris entre lesdites deux valeurs on valide la localisation de la cible (C) obtenue par ce déplacement calculé (D2), sinon on détermine une position estimée de la cible à partir des caractéristiques cinématiques de cette dernière ; et
. on remet à jour conditionnellement les modèles du fond et de la cible.

2. Procédé selon la revendication 1,
caractérisé en ce que les modèles du fond et de la cible comportent des valeurs statistiques de paramètres déterminés dudit fond et de ladite cible.

3. Procédé selon l'une des revendications 1 ou 2,
caractérisé en ce que l'image partielle (11) de la cible (C) est restreinte à un motif caractéristique de celle-ci.

4. Procédé selon l'une des revendications 1 à 3,
caractérisé en ce que l'image partielle (9,10) du fond est restreinte à un motif caractéristique dudit fond.

5. Procédé selon l'une des revendications 1 à 4,
caractérisé en ce que la fenêtre de recherche du fond est déterminée, de sorte que l'image partielle du fond est centrée dans ladite fenêtre.

6. Procédé selon l'une des revendications 1 à 5,
caractérisé en ce que la fenêtre de recherche de la cible est déterminée, de sorte que l'image partielle de la cible est centrée dans ladite fenêtre.

7. Dispositif (1) pour la mise en oeuvre du procédé spécifié sous l'une des revendications 1 à 6,
caractérisé en ce qu'il comporte :
- des moyens de prise de vue (3), pour effectuer une prise de vue (V0,V1) du champ de vision du détecteur optique (2) ;
- un dispositif d'extraction d'images (7), pour isoler au moins une image partielle (9,10) du fond et une image partielle (11) de la cible, ainsi qu'une fenêtre (19) de recherche du fond et une fenêtre (26) de recherche de la cible ;
- une mémoire de données (6), pour enregistrer les images partielles du fond et de la cible, ainsi que les valeurs caractéristiques de paramètres déterminés du fond et de la cible ;
- un dispositif de mise en correspondance (20), recevant les informations de la mémoire de données (6) et du dispositif d'extraction d'images (7) et recherchant l'image partielle (9) du fond et l'image partielle (11) de la cible dans les fenêtres de recherche correspondantes (19,26) ;
- un premier calculateur (23) associé audit dispositif de mise en correspondance (20), calculant le déplacement (D1) du détecteur optique (2) et le déplacement (D2) de la cible (C) ;
- un système de validation (27) de la localisation de la cible, comparant le déplacement calculé (D2) de la cible (C) à des valeurs de déplacement déterminées à partir de caractéristiques cinématiques de la cible (C), pour déterminer une estimation de la position de la cible (C) ; et
- un second calculateur (29), permettant de remettre à jour les modèles du fond et de la cible.

## Patentansprüche

1. Verfahren zur Ortsbestimmung eines im Gesichtsfeld eines optischen Detektors (2) beobachteten Ziels (C), dadurch gekennzeichnet, daß:
- in einer Vorstufe eine Aufnahme (V0) des Gesichtsfeldes des optischen Detektors (2) erfolgt und ein Hintergrundmodell mit mindestens einem Hintergrundteilbild (9,10) und ein Zielmodell mit einem Zielteilbild (11) sowie kinematische Merkmale des Ziels bestimmt werden; und
- während der gesamten Dauer der Ortsbestimmung folgende Stufen wiederholt werden:
. aktuelle Aufnahme (V1) des Gesichtsfeldes;
. Isolierung mindestens eines Hintergrundsuchfensters (19) aus der aktuellen Aufnahme (V1);
. Ermittlung des Hintergrundteilbildes (9) im isolierten Suchfenster (19);
. aus der Lage des Teilbildes (9) im Suchfenster (19) Bestimmung der Bewegung (D1) des optischen Detektors (2) zwischen der vorangegangenen Aufnahme und der aktuellen Aufnahme;
. Isolierung eines Zielsuchfensters (26) aus der aktuellen Aufnahme (V1) unter Berücksichtigung der errechneten Bewegung des optischen Detektors und der Lage des Ziels in der vorangegangenen Aufnahme;
. Ermittlung des Teilbildes (11) des Ziels (C) im isolierten Suchfenster (26);
. aus der Lage dieses Teilbildes (11) im Suchfenster (26) Bestimmung der Bewegung (D2) von Ziel (C) gegenüber dem Hintergrund;
. Vergleich der errechneten Bewegung (D2) von Ziel (C) mit zwei Bewegungswerten, einem Kleinst- und einem Höchstwert, die aus den kinematischen Merkmalen von Ziel (C) bestimmt wurden, so daß, wenn die errechnete Bewegung (D2) innerhalb der beiden Werte liegt, die durch diese errechnete Bewegung (D2) erhaltene Ortsbestimmung von Ziel (C) validiert, andernfalls jedoch eine geschätzte Lage des Ziels aus dessen kinematischen Merkmalen bestimmt wird; und
. das Hintergrundmodell und das Zielmodell unter bestimmten Bedingungen aktualisiert werden.

2. Verfahren nach Anspruch 1,
dadurch gekennzeichnet, daß das Hintergrundmodell und das Zielmodell statistische Werte bestimmter Hintergrund- und Zielparameter enthalten.

3. Verfahren nach einem der Ansprüche 1 oder 2,
dadurch gekennzeichnet, daß das Teilbild (11) von Ziel (C) auf ein charakteristisches Motiv desselben beschränkt ist.

4. Verfahren nach einem der Ansprüche 1 bis 3,
dadurch gekennzeichnet, daß das Hintergrundteilbild (9,10) auf ein charakteristisches Motiv des Hintergrundes beschränkt ist.

5. Verfahren nach einem der Ansprüche bis 4,
dadurch gekennzeichnet, daß das Hintergrundsuchfenster so bestimmt : wird, daß sich das Hintergrundteilbild in diesem Fenster befindet.

6. Verfahren nach einem der Ansprüche 1 bis 5,
dadurch gekennzeichnet, daß das Zielsuchfenster so bestimmt wird, daß sich das Zielteilbild in diesem Fenster befindet.

7. Anordnung (1) zur Anwendung des unter einem der Ansprüche 1 bis 6 spezifizierten Verfahrens,
dadurch gekennzeichnet, daß sie umfaßt:
- Mittel (3) für eine Aufnahme (V0,V1) des Gesichtsfeldes des optischen Detektors (2);
- eine Bildauszugsvorrichtung (7) zur Isolierung mindestens eines Hintergrundteilbildes (9,10) und eines Zielteilbildes (11) sowie eines Hintergrundsuchfensters (19) und eines Zielsuchfensters (26);
- einen Datenspeicher (6) zur Speicherung der Hintergrund- und Zielteilbilder sowie der charakteristischen Werte bestimmter Hintergrund- und Zielparameter;
- eine Vergleichsvorrichtung (20), an die die Informationen aus dem Datenspeicher (6) und aus der Bildauszugsvorrichtung (7) gelangen und die das Hintergrundteilbild (9) und das Zielteilbild (11) in den entsprechenden Suchfenstern (19,26) ermittelt;
- einen der Vergleichsvorrichtung (20) zugeordneten ersten Rechner (23), der die Bewegung (D1) des optischen Detektors (2) und die Bewegung (D2) von Ziel (C) errechnet;
- ein System (27) zur Validierung der Ortsbestimmung des Ziels durch Vergleich der errechneten Bewegung (D2) des Ziels (C) mit Bewegungswerten, die zur Bestimmung der geschätzten Lage von Ziel (C) aus kinematischen Merkmalen des Ziels (C) ermittelt wurden; und
- einen zweiten Rechner (29), der die Aktualisierung des Hintergrundmodells und des Zielmodells ermöglicht.

## Claims

1. Process for determining the location of a target (C) observed in the field of view of an optical detector (2), characterized in that:
- in a preliminary step, a picture (V0) is taken of the field of view of the optical detector (2) and there are determined a model of the background including at least one partial image (9, 10) of the background and a model of the target including a partial image (11) of the target, as well as kinematic characteristics of the latter; and
- throughout the duration of determination of location, the following steps are repeated:
• a current picture (V1) is taken of the field of view;
• at least one background search window (19) is isolated from the said current picture (V1);
• the partial image (9) of the background is searched for in the said isolated search window (19);
• the movement (D1) of the optical detector (2) between the preceding picture and the said current picture is determined from the position of this partial image (9) in the said search window (19);
• a target search window (26) is isolated from the current picture (V1), while taking account of the calculated movement of the optical detector and the position of the target in the preceding picture;
• the partial image (11) of the target (C) is searched for in the said isolated search window (26);
• the movement (D2) of the target (C) with respect to the background is determined from the position of this partial image (11) in the said search window (26);
• the said calculated movement (D2) of the target (C) is compared with two values, minimum and maximum, of movement which are determined from the kinematic characteristics of the target (C), in such a way that if the calculated movement (D2) is between the said two values the location of the target (C) obtained through this calculated movement (D2) is confirmed, otherwise an estimated position of the target is determined from the kinematic characteristics of the latter; and
• the models of the background and of the target are conditionally updated.

2. Process according to Claim 1,
characterized in that the models of the background and of the target include statistical values of specified parameters for the said background and for the said target.

3. Process according to either of Claims 1 or 2,
characterized in that the partial image (11) of the target (C) is restricted to a characteristic motif of the latter.

4. Process according to one of claims 1 to 3,
characterized in that the partial image (9, 10) of the background is restricted to a characteristic motif of the said background.

5. Process according to one of Claims 1 to 4,
characterized in that the background search window is determined in such a way that the partial image of the background is centred in the said window.

6. Process according to one of Claims 1 to 5,
characterized in that the target search window is determined in such a way that the partial image of the target is centred in the said window.

7. Device (1) for the implementation of the process specified in one of claims 1 to 6,
characterized in that it includes:
- picture-taking means (3) for taking a picture (V0, V1) of the field of view of the optical detector (2);
- an image extraction device (7) for isolating at least one partial image (9, 10) of the background and one partial image (11) of the target, as well as a background search window (19) and a target search window (26);
- a data memory (6) for recording the partial images of the background and of the target, as well as the characteristic values of specified parameters for the background and for the target;
- a device for matching (20), receiving the information from the data memory (6) and from the image extraction device (7) and searching for the partial image (9) of the background and the partial image (11) of the target in the matching search windows (19, 26);
- a first calculator (23) associated with the said matching device (20), calculating the movement (D1) of the optical detector (2) and the movement (D2) of the target (C);
- a system (27) for confirming the location of the target, comparing the calculated movement (D2) of the target (C) with movement values determined from kinematic characteristics of the target (C), for determining an estimation of the position of the target (C); and
- a second calculator (29), allowing the updating of the models of the background and of the target.
